# EUROPEAN PATENT APPLICATION

(11) **EP 4 611 135 A1**
(43) Date of publication of application: **03.09.2025**
(21) Application number: 24818586.0
(22) Date of filing: 31.05.2024
(51) Int. Cl.: H01M 50/147

(54) **BATTERY TOP COVER, POWER BATTERY, AND ASSEMBLY PROCESS FOR BATTERY TOP COVER**

(30) Priority: 09.06.2023 CN 202321485315 U; 09.06.2023 CN 202310690166
(71) Applicant: Eve Power Co., Ltd., Jingmen, Hubei 448000 (CN)
(72) Inventor: ZHENG, Xu, Jingmen, Hubei 448000 (CN); SHU, Kuanjin, Jingmen, Hubei 448000 (CN); HE, Xiaowu, Jingmen, Hubei 448000 (CN); AN, Suli, Jingmen, Hubei 448000 (CN); WANG, Junmin, Jingmen, Hubei 448000 (CN); HE, Wei, Jingmen, Hubei 448000 (CN)
(74) Representative: Berggren Oy
(86) International application number: PCT/CN2024/096872
(87) International publication number: WO 2024/251054

(57) **Abstract**

Disclosed herein are a battery top cover, a process for assembling a battery top cover, and a power battery. The battery top cover comprises a cover assembly, a post and a pressing block. The post passes through the cover assembly and then is engaged with a mounting hole of the pressing block, a welding groove is formed on a surface of the pressing block, the welding groove is communicated with a peripheral side of the mounting hole, the post and the pressing block are fixed by welding, and the pressing block and the post respectively abut against opposite sides of the cover assembly. The present disclosure improves the assembly efficiency of the battery top cover and ensures the connection strength of the battery top cover.

## Description

This application claims to priority of the Chinese Patent Application No. 202310690166.X, filed on June 9, 2023, and the Chinese Patent Application No. 202321485315.0, filed on June 9, 2023, the entire disclosures of which are incorporated herein by reference.

### TECHNICAL FIELD

The present disclosure relates to the field of batteries, and more particularly, to a battery top cover, a power battery, and a process for assembling a battery top cover.

### BACKGROUND

Battery top covers are largely applied to power batteries of new-energy vehicles. The assembly of the battery top covers generally includes injection molding and riveting in the related art.

### SUMMARY

The assembly of the battery top cover by riveting includes a relatively large number of assembly procedures, complex structures, complicated operation steps, resulting in lower production efficiency of the battery top cover, so that the production capacity of the battery top cover cannot meet the demands of the growing battery market. The injection molding process, which is suitable for the battery top cover having a relatively wide size, is limited by various factors such as an injection molding equipment, site, and material molding process.

According to a first aspect, the present disclosure provides a battery top cover including:
a cover assembly;
a post and a pressing block, in which a mounting hole is formed in the pressing block, the post passes through the cover assembly and engages with the mounting hole, a welding groove is formed on a surface of the pressing block and in communication with a peripheral side of the mounting hole, the post is fixed to the pressing block by welding, the welding groove is configured to receive a welding residue, and the pressing block and the post respectively abut against opposite sides of the cover assembly.

According to a second aspect, the present disclosure provides a power battery including a housing, a cell pack, and a battery top cover in the first aspect, in which the cell pack is disposed within the housing, and the battery top cover is disposed on an open end of the housing.

According to a third aspect, the present disclosure provides a process for assembling a battery top cover to form the battery top cover in the first aspect, the process including:
Step S1: placing a sealing element on the post;
Step S2: passing the post with the sealing element through the cover assembly to engage with the mounting hole of the pressing block;
Step S3: applying pressure to the top of the post using a fixture, and allowing the top of the post to overflow in all directions to provide a tight contact between the post, the pressing block, and the cover assembly;
Step S4: connecting and fixing the pressing block and the post by welding.

### BENEFICIAL EFFECT

According to the battery top cover provided in the present disclosure, the post passes through the cover assembly and engages with the mounting hole. By applying pressure force to the whole battery top cover, various components are contacted to each other closely, and then the pressing block and the post are fixed together by welding, thereby forming the entire battery top cover, with stable connection, simple process, and low cost, and improving the assembly efficiency of the battery top cover, while ensuring the connection strength of the battery top cover. The welding groove is provided to receive the welding residue to prevent the welding residue from protruding from the upper surface of the pressing block, thereby ensuring the appearance flatness and aesthetic appearance of the battery top cover.

According to the power battery provided in the present disclosure, the battery top cover can provide increased assembly efficiency and reduced cost, and ensure the structural strength and connection strength thereof.

The process for assembling the battery top cover provided in the present disclosure is used to assemble the above-mentioned battery top cover, so that the assembly efficiency is high, the cost is reduced, and the structural strength of the battery top cover can be ensured.

### BRIEF DESCRIPTION OF THE DRAWINGS

FIG. 1 is a schematic diagram of a battery top cover according to some embodiments of the present disclosure.
FIG. 2 is an exploded view of a battery top cover according to some embodiments of the present disclosure.
FIG. 3 is a top view of a battery top cover according to some embodiments of the present disclosure.
FIG. 4 is a sectional view at A-A in FIG. 3.
FIG. 5 is a partially enlarged view at B in FIG. 4.
FIG. 6 is a schematic diagram of a post according to some embodiments of the present disclosure.
FIG. 7 is an axial sectional view of a post according to some embodiments of the present disclosure.
FIG. 8 is a schematic diagram of a pressing block according to some embodiments of the present disclosure.
FIG. 9 is a schematic diagram of an upper plastic member according to some embodiments of the present disclosure.
FIG. 10 is a schematic diagram of a post according to some embodiments of the present disclosure.
FIG. 11 is a top view of a battery top cover according to some embodiments of the present disclosure.
FIG. 12 is a sectional view at C-C in FIG. 11.
FIG. 13 is a partially enlarged view at D in FIG. 12.
FIG. 14 is a flowchart of a process for assembling a battery top cover according to some embodiments of the present disclosure.
FIG. 15 is a flowchart of step S2 according to some embodiments of the present disclosure.

### List of reference numerals:

1. Cover assembly; 11. Upper plastic member; 111. Receiving groove; 112. Exhaust groove; 113. Convex block; 12. Cover plate; 121. Explosion-proof valve hole; 13. Lower plastic member;
2. Post; 21. Base plate; 211. Second groove; 212. Step surface; 22. Post body; 221. First groove; 23. Lower column; 24. Upper column; 241. Positioning groove;
3. Pressing block; 31. Mounting hole; 32. Welding groove;
4. Sealing element;
5. Connecting piece; 51. Step hole;
6. Explosion-proof valve assembly; 61. Explosion-proof sheet; 62. Explosion-proof film.

### DETAILED DESCRIPTION OF THE EMBODIMENTS

### Embodiment 1

The embodiment provides a power battery as a prismatic cell. The power battery includes a housing, a cell pack, and a battery top cover. The cell pack is disposed in the housing, and the battery top cover is disposed on an open end of the housing. The housing is configured to hold the cell pack to provide effective restraint and protection for the cell pack. The housing may be made of a conductive metallic material, such as aluminum and aluminum alloy. The battery top cover may seal and connect to the housing by welding.

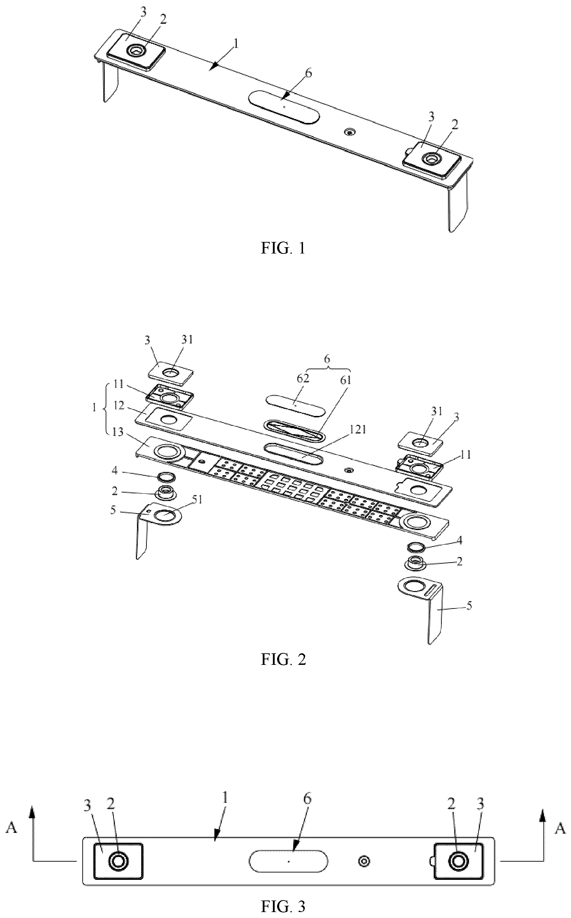

Specifically, referring to FIGs. 1 and 2, the battery top cover includes a cover assembly 1, a post 2, a pressing block 3, and a sealing element 4. The post 2 and the pressing block 3 are respectively disposed on opposite sides of the cover assembly 1. The cover assembly 1 includes an upper plastic member 11, a cover plate 12, and a lower plastic member 13 stacked in sequence from top to bottom. The pressing block 3 is disposed on a side of the upper plastic member 11 away from the cover plates 12. A through hole for the post 2 to pass is formed in all of the upper plastic member 11, the cover plate 12, and the lower plastic member 13. A mounting hole 31 is formed in the pressing block 3. The cover plate 12 of the present embodiment is an aluminum sheet. The post 2 passes through the through hole of the lower plastic member 13, the cover plate 12, and the upper plastic member 11 from bottom to top, and then engages with the mounting hole 31 of the pressing block 3. The post 2 and the pressing block 3 are fixed by laser welding. The pressing block 3 abuts against the upper surface of the cover assembly 1, and the post 2 abuts against the lower surface of the cover assembly 1. The sealing element 4 is disposed on the post 2 to seal the post 2 and the cover plate 12.

Referring to FIG. 2, the battery top cover is assembled in such a manner that the sealing element 4 is placed on an upper portion of the post 2, the lower plastic member 13 is placed under the cover plate 12, and the post 2 with the sealing element 4 passes through the lower plastic member 13 and the cover plate 12 in sequence, so that a base plate 21 at the bottom of the post 2 abuts against the lower surface of the lower plastic member 13. Then, the upper plastic member 11 is placed over the cover plate 12 and put on the post 2, the pressing block 3 is placed over an upper portion of the upper plastic member 11 and put on the post 2. The top of the post 2 is pressed by a fixture so that the top of the post 2 flows to all direction to contact the various elements to each other closely. Then, the pressing block 3 is connected and fixed to the post 2 by laser welding. By this manner, these elements are assembled into a whole unit, achieving a stable connection. Compared with a top cover assembled by riveting, the top cover formed by welding has simple welding process, low cost, improved assembly efficiency, and the connection strength of the battery top cover can be ensured.

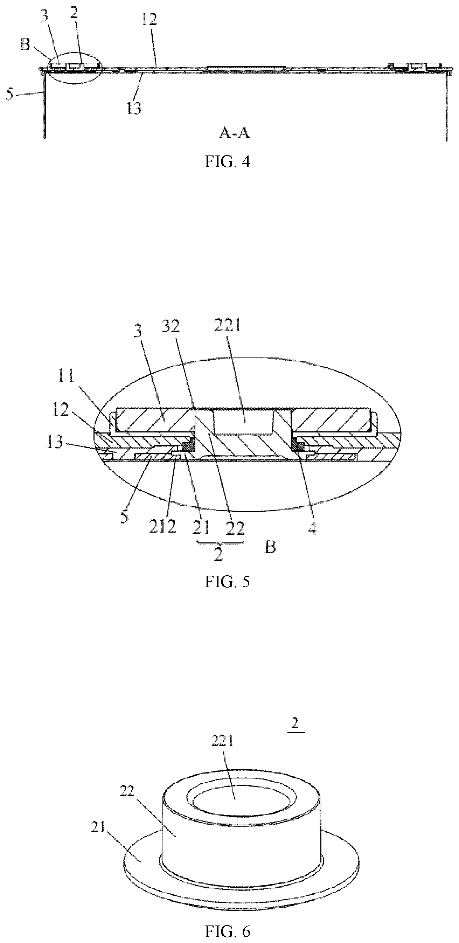

It is to be noted that, referring to FIGs. 3 to 5, the cover plate 12, as a supporting member for the battery top cover, is provided to carry other components. Referring to FIG. 5, the upper plastic member 11 is embedded in a fitting gap between the pressing block 3 and the cover plate 12, acting as an insulator, so that the pressing block 3 is separated from the cover plate 12, thereby reducing probability of external short circuit of the power battery, and improving the safety performance of the power battery. The lower plastic member 13 is positioned between the cover plate 12 and the base plate 21 of the post 2 to separate the cover plate 12 from the base plate 21 of the post 2, thereby providing insulation and reducing the probability of external short circuit of the battery.

Referring to FIG. 5, the sealing element 4 has an annular step structure, in which a part having a smaller outer diameter is embedded in a fitting gap between the cover plate 12 and the post 2, and the other part having a larger outer diameter abuts against a lower surface of the cover plate 12, so that the sealing element 4 performs a sealing function while also insulating the cover plate 12 from the post 2. The sealing element 4 is elastic and interference-fitted in the fitting gap between the cover plate 12 and the post 2, which helps to improve the sealability of the overall structure, prevents air from entering the inside of the power battery, and prevents leakage of the electrolyte. The sealing element 4 is made of an elastic material that is resistant to acids and alkalis and to high temperatures, such as a fluororubber material that is resistant to corrosion of the electrolyte.

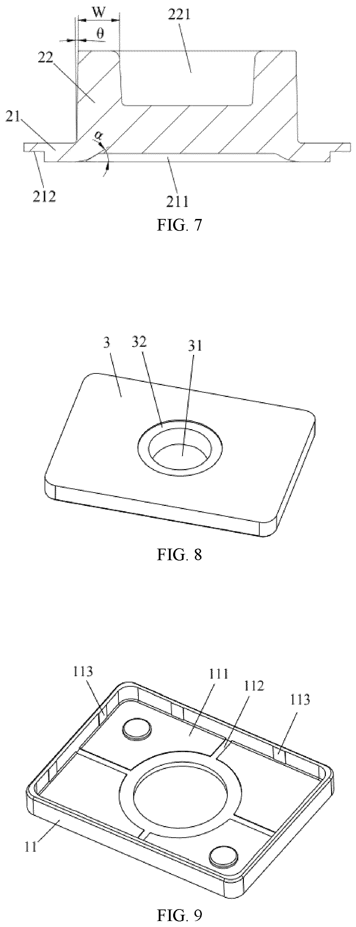

Referring to FIGs. 5 and 8, a welding groove 32 is disposed on a surface of the pressing block 3. The welding groove 32 is connected to the peripheral side of the mounting hole 31 and is configured to receive a welding residue. Specifically, the upper surface of the pressing block 3 is provided above the upper surface of the post 2, the welding groove 32 is circular and is positioned above and coaxially with the mounting hole 31, and the radial dimension of the welding groove 32 is larger than the radial dimension of the mounting hole 31, thereby forming the step structure at the top of the pressing block 3. It is to be understood that during welding of the pressing block 3 and the post 2, the welding is carried out at the top of the pressing block 3 along the junction of the post 2 and the pressing block 3, so that during welding the aluminum material at the top of the post 2 is extruded to form the welding residue. The welding groove 32 is configured to receive the welding residual extruded by welding, preventing the welding residual from protruding from the upper surface of the pressing block 3, and ensuring the appearance flatness and aesthetic appearance of the battery top cover. In other embodiments, the welding groove 32 may have a square shape, an elliptical shape, or other special-shaped shape, provided that the dimension of the outer edge of the welding groove 32 is larger than that of the mounting hole 31, which is not specifically limited herein.

Specifically, the mounting hole 31 is disposed at the bottom of the welding groove 32, so that it is ensured that the dimension of the outer edge of the welding groove 32 is larger than that of the mounting hole 31.

Referring to FIG. 2, specifically, the battery top cover also can includes two posts 2, a negative post and a positive post, respectively. The negative post and the positive post are in communication with an external electric element, achieving current conduction. Correspondingly, the battery top cover also can includes two pressing blocks 3, two upper plastic members 11 and two sealing elements 4, to cooperate with the corresponding posts 2.

Referring to FIG. 5, the battery top cover further includes connecting pieces 5 disposed on a side of the lower plastic member 13 away from the cover plate 12. The number of the connecting pieces 5 are set to be two, a positive connecting piece and a negative connecting piece, respectively. The connecting pieces 5 are provided in a bent configuration. An end of the positive connecting piece is fixedly connected to the bottom of the positive post, and the other end of the positive connecting piece is connected to a positive tab of the cell pack; and an end of the negative connecting piece is connected to the bottom of the negative post, and the other end of the negative connecting piece is connected to a negative tab of the cell pack, thereby realizing current conduction. It is to be noted that, since the positive connecting piece needs to be welded and fixed to the positive tab made of aluminum, the positive connecting piece is preferably made of aluminum; and the negative connecting piece needs to be welded and fixed to the negative tab made of copper, and the negative connecting piece is preferably made of copper.

Referring to FIGs. 5 and 6, in the present embodiment, the post 2 has a cap-like structure. The post 2 includes a base plate 21 and a post body 22 that are arranged coaxially, and the base plate 21 has a larger peripheral dimension than the post body 22. The base plate 21 abuts against the lower surface of the cover plate 12 to form a limit, and the post body 22 engages with the mounting hole 31. Each of the base plate 21 and the post body 22 has a cylindrical structure, and the outer diameter of the base plate 21 is larger than the outer diameter of the post body 22, so that after the post body 22 penetrates the cover assembly 1, the base plate 21 can abut against the lower surface of the cover plate 12 to form a limiting function. In other embodiments, the base plate 21 and the post body 22 may have a square, elliptical, or otherwise shape, provided that the peripheral dimension of the base plate 21 is larger than the peripheral dimension of the post body 22, which is not specifically limited herein.

Preferably, the post 2 is integrally formed, so that the structural strength of the post 2 is improved. In addition, there is no need to assemble the base plate 21 and the post body 22, sampling the assembling process. Specifically, the negative post is integrally formed from a copper-aluminum composite plate by a cold heading process, and the positive post is integrally formed from an aluminum plate by a cold heading process. It is to be understood that an end of the positive post needs to be welded and fixed to the positive connecting piece made of aluminum, and thus the positive post can be prepared from pure aluminum plate; and an end of the negative post needs to be welded and fixed to the negative connecting piece made of copper, and thus the negative post can be prepared from a copper-aluminum composite plate. The upper half of the post body 22 is made of aluminum, and the lower half of the post body 22 is made of copper for welding and fixing to the negative connecting piece made of copper. By adopting the copper-aluminum composite plate for the negative post, a conventional process for connecting the negative post by friction welding is omitted, and cost is saved. Due to the use of the copper-aluminum composite plate, it also possible to reduce the amount of copper, which reduces the weight of the battery top cover.

Referring to FIGs. 2 and 7, the axis of the post 2 is perpendicular to the lower plastic member 13, and the outer side wall of the post 2 is disposed obliquely with respect to the axis of the post 2. The inner wall of the mounting hole 31 has an inclination direction and inclination angle that are same as those of the outer side wall of the post 2, and the outer side wall of the post 2 is fitted with the inner wall of the mounting hole 31. Herein, the outer side wall of the post 2 specifically refers to the outer side wall of the post body 22 and does not include the outer side wall of the base plate 21. In this embodiment, referring to FIG. 7, the outer side wall of the post 2 is obliquely arranged from bottom to top toward the inside of the post 2. In other embodiments, the outer side wall of the post 2 may be obliquely arranged from bottom to top toward the direction away from the post 2, provided that the inner wall of the mounting hole 31 is set to the same inclination direction and inclination angle. That is, the outer side wall of the post body 22 has an inclined surface, and the inner wall of the mounting hole 31 also has an inclined surface, so that the post 2 and the mounting hole 31 are fitted by the inclined surfaces. On the one hand, the provision of the inclined surfaces prevents the lower plastic member 13 from being burnt by the laser during the laser welding process, and on the other hand, the joint surface between the post body 22 and the pressing block 3 can be interlocked by the inclined surfaces, thereby improving the structural strength of the battery cover plate.

Alternatively, referring to FIG. 7, an angle θ between the outer side wall of the post body 22 and its axis is greater than 0° and less than or equal to 3°, for example, 1°, 2° or 3°. An angle between the inner wall of the mounting hole 31 and its axis is also greater than 0° and less than or equal to 3°, for example, 1°, 2° or 3°. By setting the inclination angle of the outer side wall of the post body 22 and the inclination angle of the inner wall of the mounting hole 31 within the above-mentioned range, it is possible to prevent the lower plastic member 13 from burning due to direct laser irradiation during laser welding, and to interlock the joint surface between the post body 22 and the pressing block 3, thereby improving the structural strength of the battery cover plate.

Referring to FIGs. 6 and 7, a first groove 221 is formed in the top portion of the post body 22. The first groove 221 can be provided so as to reduce the weight, thereby reducing the weight of the battery top cover and realizing the lightweight design. Since the post 2 is formed by a cold heading process, the blank is deformed by cold extrusion to form the post 2 in the cold heading process, and by forming a first recess 221 at the top of the post body 22, the material at the first groove 221 can be moved toward two sides of the post body 22, thereby increasing the height of the post body 22 to meet the requirements of the design size. The shape of the first groove 221 may be, but is not limited to, a circular shape, a square shape, an elliptical shape, or other special-shaped shape. The first groove 221 may be flexibly provided as required, and is not specifically limited herein.

Preferably, referring to FIG. 7, the minimum value of a distance W between the side wall of the first groove 221 and the outer side wall of the post body 22 is greater than or equal to 2 mm, for example, 2 mm, 3 mm, 4 mm, 5 mm, 6 mm, or 7 mm. The minimum value of the distance W is also the minimum value of a wall thickness of the post body 22. By setting the minimum value of a wall thickness of the post body 22 within the above-mentioned range, it is ensured to enable the post 2 to have structural strength to satisfy welding strength, thereby ensuring structural strength of the battery top cover.

Referring to FIG. 7, a second groove 211 is formed at the bottom of the base plate 21. By forming the second groove 211 at the bottom of the base plate 21, the material at the second groove 211 can be moved toward two sides of the base plate 21 during the extrusion process, so that the diameter of the base plate 21 is larger, and the dimensions of the periphery of the second groove 211 are sufficient to meet the size requirements. In addition, since the negative post is made of a copper-aluminum composite plate by a cold heading process, the copper material can extrude the aluminum material in the process of extruding the blank due to the hardness of copper being different from that of aluminum (the hardness of copper is larger than that of aluminum), so that a wave-shaped joint surface is prone to be formed at the joint of the copper-aluminum material, thereby affecting the structural strength of the negative post. By forming the second groove 211 at the bottom of the base plate 21, a flow space is provided for the copper material in equal volume deformation of the copper-aluminum composite plate, so that the extrusion of the copper material on the aluminum material is reduced, making the joint surface of the copper-aluminum material more smooth, thereby ensuring the structural strength of the negative post, and making the lower of the negative post less prone to fracture. The shape of the second groove 211 may be, but is not limited to, a circular shape, a square shape, an elliptical shape, or other special-shaped shape, and may be flexibly provided as required, which is not specifically limited herein.

Preferably, referring to FIG. 7, the axial cross-section of the second groove 211 is in an arch shape, and the angle α between the circumferential side wall of the second groove 211 and the horizontal plane is greater than or equal to 15° and less than or equal to 60°, for example, 15°, 20°, 25°, 30° or 40°. By setting the inclination angle of the circumferential side wall of the second groove 211 within the above-mentioned range, the copper material in the copper-aluminum composite plate can obtain better flowability, so that the lower portion of the negative post is not easily broken in the integrated molding process, thereby ensuring the structural strength of the negative post.

Referring to FIG. 9, an exhaust groove 112 is disposed at a side of the upper plastic member 11 abutting against the pressing block 3. The exhaust groove 112 communicates with the mounting hole 31. After the bottom surface of the pressing block 3 is attached to the upper plastic member 11, there is a certain gap between the exhaust groove 112 and the pressing block 3. The exhaust groove 112 is capable of discharging the heat and gas generated during the welding process, and prevents the post 2 or the pressing block 3 from being deformed due to the fact that the heat and gas cannot be discharged during the welding process. The exhaust groove 112 is provided in the shape of an annular groove plus four straight grooves communicating with the annular groove. In other embodiments, the exhaust groove 112 may be provided in other shapes, and may be flexibly provided as required, which is not specifically limited herein.

Preferably, referring to FIG. 9, a receiving groove 111 is disposed at a side of the upper plastic member 11 close to the pressing block 3. The pressing block 3 is provided in the receiving groove 111 so as to limit the pressing block 3. The exhaust groove 112 is disposed at the bottom of the receiving groove 111. After the pressing block 3 is disposed in the receiving groove 111, the bottom surface of the pressing block 3 is attached to the bottom surface of the receiving groove 111. A plurality of convex blocks 113 are disposed at the side wall of the accommodating groove 111 at intervals along the circumferential direction thereof. The convex blocks 113 are thin in thickness, and abut against the pressing blocks 3. When the pressing block 3 is placed in the accommodating groove 111, the convex blocks 113 can position the pressing block 3. Each convex block 113 may have an inclined surface, so that the pressing block 3 can enter the accommodating groove 111 along the surface of the convex block 113, so that the operation is more convenient. The number of the convex blocks 113 is not specifically limited herein, and may be provided flexibly according to actual requirements.

Referring to FIGs. 2, 5, and 7, an edge of the base plate 21 is configured to have a step structure, a step hole 51 is formed in the connecting piece 5, and the step structure is engaged with the step hole 51. Specifically, the step structure is such that the base plate 21 has two different outer diameters. The step structure has a step surface 212. The step hole 51 includes two holes with different diameters. After the base plate 21 is engaged with the connecting piece 5, a part of the base plate 21 having a smaller outer diameter passes through one of the two holes of the step hole 51 that has a smaller diameter, and another part of the base plate 21 having a greater outer diameter engages with another one of the two holes of the step hole 51 that has a greater diameter. The step surface 212 of the base plate 21 is engaged with the step surface of the step hole 51. With this arrangement, the positioning effect between the base plate 21 and the connecting piece 5 can be improved, and the mutual movement between the base plate 21 and the connecting piece 5 can be restricted after assembly, thereby facilitating a subsequent assembly and welding process.

Referring to FIGs. 1 and 2, the battery top cover further includes an explosion-proof valve assembly 6. The explosion-proof valve assembly 6 includes an explosion-proof sheet 61 and an explosion-proof film 62. The explosion-proof sheet 61 is mounted in an explosion-proof hole 121 of the cover plate 12 by a welding process. The explosion-proof sheet 61 can automatically and quickly release pressure of the battery when the internal pressure of the battery rises, thereby avoiding occurrence of a safety accident caused by explosion of the power battery. The explosion-proof film 62 serves to protect the explosion-proof sheet 61 from external dust, water or other impurities entering the explosion-proof sheet 61.

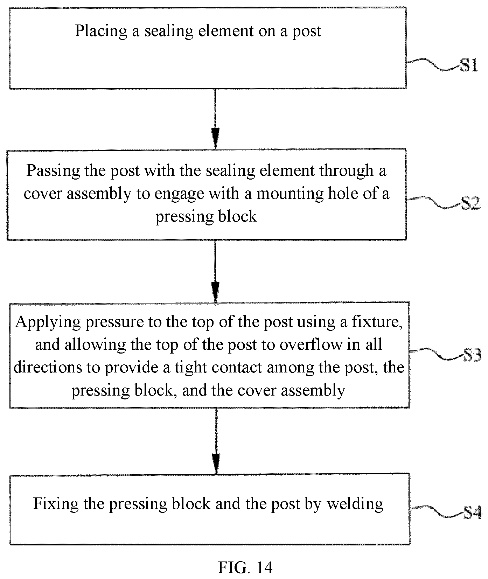

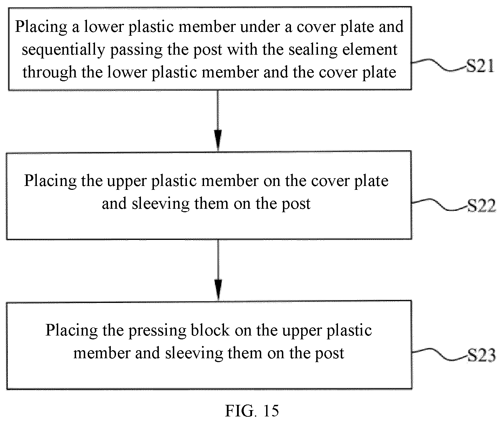

Referring to FIGs. 14 and 15, the present embodiment further provides a process for assembling the battery top cover described above, as shown in FIG. 2. The process includes:
Step S1: placing the sealing element 4 on the post 2;
Step S2: passing the post 2 with the sealing element 4 through the cover assembly 1 to engage with the mounting hole 31 of the pressing block 3;
Step S3: applying pressure to the top of the post 2 using a fixture, and allowing the top of the post 2 to flow to all directions to provide a tight contact among the post 2, the pressing block 3 and the cover assembly 1;
Step S4: fixing the pressing block 3 and the post 2 by welding.

Specifically, the step S2 includes:
Step S21: placing the lower plastic member 13 under the cover plate 12, and passing the post 2 with the sealing element 4 sequentially through the lower plastic member 13 and the cover plate 12. After step S21, the base plate 21 at the bottom of the post 2 abuts against the lower surface of the lower plastic member 13.
Step S22: placing the upper plastic member 11 on the cover plate 12 and sleeving them on the post 2; and Step S23: placing the pressing block 3 on the upper plastic member 11 and sleeving them on the post 2.

It is to be noted that, by applying pressure to the top of the post 2 by the fixture, the top of the post 2 flows to all directions, so that the post 2, the pressing block 3, the upper plastic member 11, the cover plate 12, the lower plastic member 13, and the sealing element 4 are closely contacted to each other. Then, the pressing block 3 and the post 2 are fixed together by laser welding, so that all components are assembled into a whole unit, reaching a stable connection. Compared with the top cover assembled by riveting, the welding process is simple, the cost is low, the assembly efficiency of the battery top cover is improved, and the connection strength and the structural strength of the battery top cover can be ensured.

### Embodiment 2

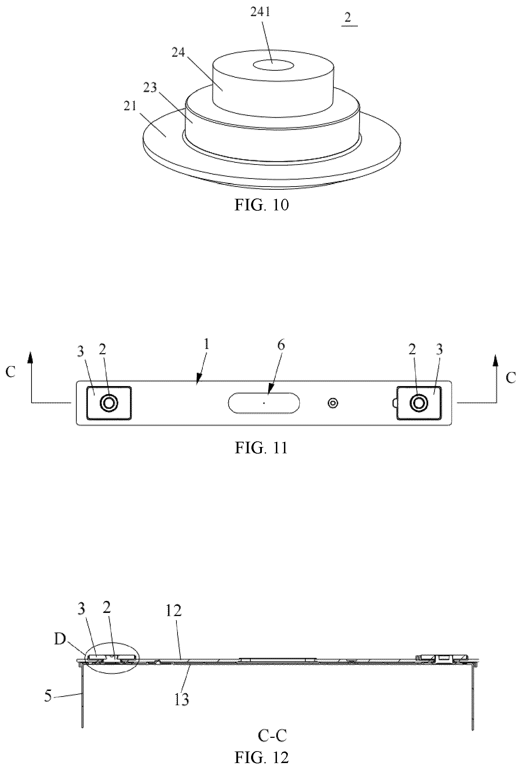

The battery top cover according to the present embodiment has a substantially same structure as that in Embodiment 1 (in which the similarities are not repeated herein), except that:
Referring to FIGs. 10 to 13, in the present embodiment, the post 2 is integrally formed by a cold heading process. Specifically, the post 2 has a tower-shaped structure including the base plate 21, a lower column 23, and an upper column 24 that are arranged coaxially and gradually decreasing in size. The base plate 21 abuts against a side surface of the lower plastic member 13 away from the pressing block 3, the lower column 23 passes through the cover assembly 1 and abuts against the lower surface of the pressing block 3, and the upper column 24 engages with the mounting hole 31, that is, the outer side wall of the upper column 24 abuts against the inner wall of the mounting hole 31. By arranging the post 2 in the tower-type structure in which the outer diameters are gradually decreased, the height of the post 2 can be raised due to equal volume deformation in the cold heading process, meeting the requirements of the design in size. Each of the base plate 21 and the upper column 24 has a cylindrical structure,
In other embodiments, the base plate 21, the lower column 23, and the upper column 24 may have a square, an elliptical, or other special-shaped structure, provided that the peripheral dimensions are gradually decreased, which are not specifically limited herein.

Preferably, referring to FIG. 10, a positioning groove 241 is formed at the top of the upper column 24. The positioning groove 241 is configured to receive an insertion and positioning of an external pressing fixture during welding. The shape of the positioning groove 241 may be, but is not limited to, a circular shape, a square shape, an elliptical shape, or other special-shaped shape, which may be provided as required, and is not specifically limited herein.

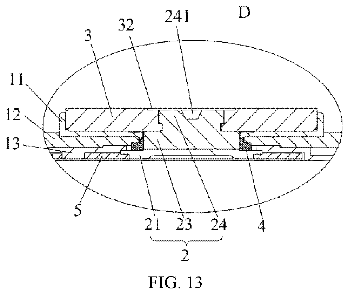

It is to be noted that the post 2 according to the present embodiment can also be suitable for a riveting process. In this case, the positioning groove 241 is configured to receive the positioning insertion of a riveting fixture. Referring to FIG. 13, when the post 2 and the pressing block 3 are assembled, the riveting fixture is inserted into the positioning groove 241 to press and deform the end of the post 2 laterally, so that the top of the post 2 is subjected to a force to expand and fill the top of the pressing block 3, while the pressing block 3, which is in contact with the riveting fixture, is also pressed and deformed, so that the pressing block 3 is subjected to a force to expand and fill a position between the upper column 24 and the lower column 23. Accordingly, the pressing block 3 and the post 2 are snap-fitted to form the riveting structure shown in FIG. 13. Then, the upper column 24 and the pressing block 3 are welded, so that the connection of the post 2 and the pressing block 3 is tighter, and the overall structure of the battery top cover is more stable.

## Claims

1. A battery top cover comprising:
a cover assembly (1);
a post (2) and a pressing block (3), wherein a mounting hole (31) is formed in the pressing block (3), the post (2) passes through the cover assembly (1) and engages with the mounting hole (31), a welding groove (32) is disposed on a surface of the pressing block (3) and in communication with a peripheral side of the mounting hole (31), the post (2) is fixed to the pressing block (3) by welding, the welding groove (32) is configured to receive a welding residue, and the pressing block (3) and the post (2) respectively abut against opposite sides of the cover assembly (1).

2. The battery top cover according to claim 1, wherein the cover assembly (1) comprises a cover plate (12) and a lower plastic member (13) that are stacked, the pressing block (3) is disposed on a side of the cover plate (12) away from the lower plastic member (13), an axis of the post (2) is perpendicular to the lower plastic member (13), and an outer side wall of the post (2) is obliquely arranged with respect to the axis of the post (2).

3. The battery top cover according to claim 2, wherein an inner wall of the mounting hole (31) has an inclination direction and an inclination angle that are same as those of the outer side wall of the post (2), so that the outer side wall of the post (2) is engaged with the inner wall of the mounting hole (31).

4. The battery top cover according to claim 3, wherein an angle θ between the outer side wall of the post (2) and the axis of the post (2) is greater than 0° and less than or equal to 3°.

5. The battery top cover according to claim 1, wherein an upper surface of the pressing block (3) is disposed above an upper surface of the post (2), the mounting hole (31) is disposed at a bottom of the welding groove (32), and a peripheral dimension of the welding groove (32) is larger than a peripheral dimension of the mounting hole (31).

6. The battery top cover according to claim 1, wherein the post (2) comprises a negative post and a positive post, the negative post is integrally formed from a copper-aluminum composite plate by a cold heading process, and the positive post is integrally formed from an aluminum plate by a cold heading process.

7. The battery top cover according to claim 1, wherein the post (2) comprises a base plate (21) and a post body (22) that are arranged coaxially and gradually decreased peripheral dimensions, the base plate (21) abuts against a surface of the cover assembly (1), and the post body (22) is engaged with the mounting hole (31).

8. The battery top cover according to claim 7, wherein a first groove (221) is disposed on a top of the post body (22).

9. The battery top cover according to claim 8, wherein a minimum value of a distance W from a side wall of the first groove (221) to an outer side wall of the post body (22) is greater than or equal to 2 mm.

10. The battery top cover according to claim 1, wherein the post (2) comprises a base plate (21), a lower column (23), and an upper column (24) that are arranged coaxially and gradually decreased peripheral dimensions, the base plate (21) abuts against a surface of the cover assembly (1) away from the pressing block (3), the lower column (23) passes through the cover assembly (1) and abuts against a surface of the pressing block (3), and the upper column (24) is engaged with the mounting hole (31).

11. The battery top cover according to claim 10, wherein a positioning groove (241) is disposed on a top of the upper column (24), and the positioning groove (241) is provided for the insertion of an external fixture.

12. The battery top cover according to any one of claims 7 to 11, wherein a second groove (211) is disposed at a bottom of the base plate (21).

13. The battery top cover according to claim 12, wherein the second groove (211) has an axial cross-section in an arch shape, and an angle α between a circumferential side wall of the second groove (211) and a horizontal plane is greater than or equal to 15° and less than or equal to 60°.

14. The battery top cover according to any one of claims 7 to 11, wherein the battery top cover comprises a connecting piece (5) connected to a tab of a cell pack and the post (2); and
an edge of the base plate (21) is configured to have a step structure, a step hole (51) is disposed at the connecting piece (5), and the step structure is engaged with the step hole (51).

15. The battery top cover according to any one of claims 1 to 11, wherein the cover assembly (1) comprises an upper plastic member (11) and the cover plate (12), the upper plastic member (11) is disposed between the cover plate (12) and the pressing block (3), and the post (2) passes through the cover plate (12) and the upper plastic member (11) in turn and is cooperatively connected to the pressing block (3).

16. The battery top cover according to claim 15, wherein an exhaust groove (112) is disposed at a side of the upper plastic member (11) abutting against the pressing block (3) and in communication with the mounting hole (31).

17. The battery top cover according to claim 15, wherein a receiving groove (111) is disposed at a side of the upper plastic member (11) close to the pressing block (3), a convex block (113) is disposed on a side wall of the receiving groove (111), the pressing block (3) is disposed in the receiving groove (111), and the convex block (113) abuts against the pressing block (3).

18. The battery top cover according to any one of claims 2 to 4, wherein the battery top cover comprises a sealing element (4) sleeved on the post (2), and the sealing element (4) is disposed to seal the post (2) and the cover plate (12).

19. A power battery comprising a housing, a cell pack, and a battery top cover according to any one of claims 1 to 18, wherein the cell pack is disposed in the housing, and the battery top cover is disposed on an open end of the housing.

20. A process for assembling a battery top cover according to any one of claims 1 to 18, comprising:
Step S1: placing the sealing element (4) on the post (2);
Step S2: passing the post (2) with the sealing element (4) through the cover assembly (1) to engage with the mounting hole (31) of the pressing block (3);
Step S3: applying pressure to the top of the post (2) using the fixture, and allowing the top of the post (2) to overflow in all directions to provide a tight contact among the post (2), the pressing block (3), and the cover assembly (1); and
Step S4: fixing the pressing block (3) and the post (2) by welding.

21. The process for assembling the battery top cover according to claim 20, wherein the cover assembly (1) comprises the upper plastic member (11), the cover plate (12) and the lower plastic member (13) stacked in sequence, and
the step S2 comprises:
Step S21: placing the lower plastic member (13) under the cover plate (12) and sequentially passing the post (2) with the sealing element (4) through the lower plastic member (13) and the cover plate (12);
Step S22: placing the upper plastic member (11) on the cover plate (12) and sleeving them on the post (2); and
Step S23: placing the pressing block (3) on the upper plastic member (11) and sleeving them on the post (2).
